# EUROPEAN PATENT APPLICATION

(11) **EP 4 621 703 A1**
(43) Date of publication of application: **24.09.2025**
(21) Application number: 24787771.5
(22) Date of filing: 24.01.2024
(51) Int. Cl.: G06T 3/40

(54) **IMAGE SCALING METHOD AND APPARATUS, AND DEVICE AND STORAGE MEDIUM**

(30) Priority: 12.04.2023 CN 202310440006
(71) Applicant: Tencent Technology (Shenzhen) Company Limited, Shenzhen, Guangdong 518057 (CN)
(72) Inventor: GE, Yan, Shenzhen, Guangdong 518057 (CN)
(74) Representative: EP&C
(86) International application number: PCT/CN2024/073743
(87) International publication number: WO 2024/212665

(57) **Abstract**

The present application relates to the technical field of image processing. Disclosed are an image scaling method and apparatus, and a device and a storage medium. The method comprises: according to the width and height of an original image, the width and height of a target image, and an integral displacement value, obtaining a transverse scaling coefficient and a longitudinal scaling coefficient by means of a fixed-point operation; for each pixel point to be processed in the target image, according to the coordinates of the pixel point to be processed, the transverse scaling coefficient, the longitudinal scaling coefficient and the displacement value, obtaining, from the original image and by means of a fixed-point operation, the coordinates of an original pixel point corresponding to the pixel point to be processed, and a fixed-point interpolation coefficient; according to the pixel value of the original pixel point, the fixed-point interpolation coefficient and the displacement value, obtaining, by means of a fixed-point operation, the pixel value of the pixel point to be processed; and on the basis of the pixel value of each pixel point to be processed in the target image, obtaining a target image after the original image is scaled. The fixed-point operation is used in the whole image scaling process, thereby avoiding a floating-point operation, and reducing the operation amount and improving the operation efficiency.

## Description

### RELATED APPLICATION

This application claims priority to Chinese Patent Application No. 202310440006.X, filed with the China National Intellectual Property Administration on April 12, 2023 and entitled "IMAGE SCALING METHOD AND APPARATUS, DEVICE, AND STORAGE MEDIUM".

### FIELD OF THE TECHNOLOGY

This application relates to the field of image processing technologies, and in particular, to an image rescaling technology.

### BACKGROUND OF THE DISCLOSURE

An image rescaling technology is widely applied to various scenarios, including fields such as extended reality (XR), autonomous driving, face recognition, and gesture recognition, which is intended to adjust an image to a proper size for subsequent processing.

In a conventional image rescaling method, a bilinear interpolation algorithm is widely used. Specifically, a rescaling coefficient is obtained based on a size of a destination image and a size of a source image, then coordinates of several source pixel points on the source image corresponding to a to-be-processed pixel point on the destination image are determined based on the rescaling coefficient, and an interpolation coefficient is determined at the same time. A pixel value of the to-be-processed pixel point is finally obtained based on the pixel values of the several source pixel points and the interpolation coefficient.

In the bilinear interpolation algorithm provided in the foregoing related technology, a floating-point division method is used during calculation of the rescaling coefficient, and a subsequent calculation process also includes a large number of complex floating-point operations, resulting in a relatively large operation amount and relatively low operation efficiency.

### SUMMARY

Embodiments of this application provide an image rescaling method and apparatus, a device, and a storage medium. The technical solutions provided in the embodiments of this application are as follows.

According to an aspect of the embodiments of this application, an image rescaling method is provided, the method being executable by a computer device, and including:
obtaining a transverse rescaling coefficient and a longitudinal rescaling coefficient, through a first fixed-point operation based on an original size of a source image, a target size of a destination image that is to be generated, and a pre-set bit shift value
obtaining, for a given pixel point in the destination image, coordinates of a source pixel point in the source image corresponding to the given pixel point, and a fixed-point interpolation coefficient through a second fixed-point operation based on coordinates of the given pixel point, the transverse rescaling coefficient, the longitudinal rescaling coefficient, and the bit shift value
obtaining a pixel value of the given pixel point through a third fixed-point operation based on a pixel value of the source pixel point, the fixed-point interpolation coefficient, and the bit shift value, in order to generate the destination image.

According to an aspect of the embodiments of this application, an image rescaling apparatus is provided, the apparatus being deployed on a computer device, and including:
a rescaling coefficient determination module, configured to obtain a transverse rescaling coefficient and a longitudinal rescaling coefficient, through a first fixed-point operation based on an original size of a source image, a target size of a destination image that is to be generated, and a pre-set bit shift value;
an interpolation coefficient determination module, configured to obtain, for a given pixel point in the destination image, coordinates of a source pixel point in the source image corresponding to the given pixel point, and a fixed-point interpolation coefficient through a second fixed-point operation based on coordinates of the given pixel point, the transverse rescaling coefficient, the longitudinal rescaling coefficient, and the bit shift value;
a pixel value determination module, configured to obtain a pixel value of the given pixel point through a third fixed-point operation based on a pixel value of the source pixel point, the fixed-point interpolation coefficient, and the bit shift value.

According to an aspect of the embodiments of this application, a computer device is provided, including a processor and a memory, the memory having a computer program stored therein, the computer program being loaded and executed by the processor to implement the foregoing image rescaling method.

According to an aspect of the embodiments of this application, a computer-readable storage medium is provided, having a computer program stored therein, the computer program being loaded and executed by a processor to implement the foregoing image rescaling method.

According to an aspect of the embodiments of this application, a computer program product is provided, including a computer program, the computer program being stored in a computer-readable storage medium, and a processor being configured to read the computer program from the computer-readable storage medium and execute the computer program to implement the foregoing image rescaling method.

The technical solutions provided in the embodiments of this application include at least the following beneficial effects.

When the source image needs to be rescaled to obtain the destination image that meets a size requirement, the transverse rescaling coefficient and the longitudinal rescaling coefficient may be obtained through the first fixed-point operation based on the size of the source image, the size of the destination image, and a preset bit shift value. Then for each to-be-processed pixel point in the destination image, the coordinates of the source pixel point in the source image corresponding to the to-be-processed pixel point, and the fixed-point interpolation coefficient are obtained through the second fixed-point operation based on the coordinates of the to-be-processed pixel point, the transverse rescaling coefficient, the longitudinal rescaling coefficient, and the bit shift value. Next, the pixel value of the to-be-processed pixel point is obtained through the third fixed-point operation based on the pixel value of the source pixel point, the fixed-point interpolation coefficient, and the bit shift value. In the foregoing process, a rescaling coefficient is obtained through operation, then the fixed-point interpolation coefficient is calculated based on the rescaling coefficient , the pixel value of the to-be-processed pixel point is calculated based on the fixed-point interpolation coefficient , and then the destination image after the source image is rescaled is obtained based on the pixel value of each to-be-processed pixel point in the destination image, so that data is used in the whole image rescaling process to perform the fixed-point operation, thereby avoiding a floating-point operation, reducing an operation amount, and improving operation efficiency.

### BRIEF DESCRIPTION OF THE DRAWINGS

FIG. 1 is a schematic diagram of performing image rescaling on a source image to obtain a destination image.
FIG. 2 is a schematic diagram of a solution implementation environment according to an embodiment of this application.
FIG. 3 is a schematic diagram of a gesture detection scenario according to an embodiment of this application.
FIG. 4 is a flowchart of an image rescaling method according to an embodiment of this application.
FIG. 5 is a block diagram of an image rescaling apparatus according to an embodiment of this application.
FIG. 6 is a structural block diagram of a computer device according to an embodiment of this application.

### DESCRIPTION OF EMBODIMENTS

To make objectives, technical solutions, and advantages of this application clearer, implementations of this application are to be further described in detail below with reference to the accompanying drawings.

In computer image processing and computer graphics, image rescaling refers to a process of adjusting a size of a digital image, i.e., changing the size of the image by adding or removing a pixel. Due to a trade-off between processing efficiency and image quality (such as smoothness and clarity), image rescaling is not a simple process. When an image is upscaled, pixels forming an image are also increased, and the image looks "soft". When the image is downscaled, the image becomes smooth and clear.

Bilinear interpolation is a commonly used algorithm in the field of image rescaling, which takes both the processing efficiency and the image quality into consideration. In mathematics, bilinear interpolation is an extension of linear interpolation on a two-dimensional rectangular grid, which is configured for performing interpolation on a bivariate function (for example, x and y). A core idea thereof is to perform linear interpolation in two directions separately.

The image rescaling method based on bilinear interpolation of a floating-point operation provided in the related art is described below. An example in which the size includes a width-height size is used, and a process thereof is as follows:

1. A transverse rescaling coefficient and a longitudinal rescaling coefficient is calculated based on a width-height size of a source image and a width-height size of a destination image to be generated.

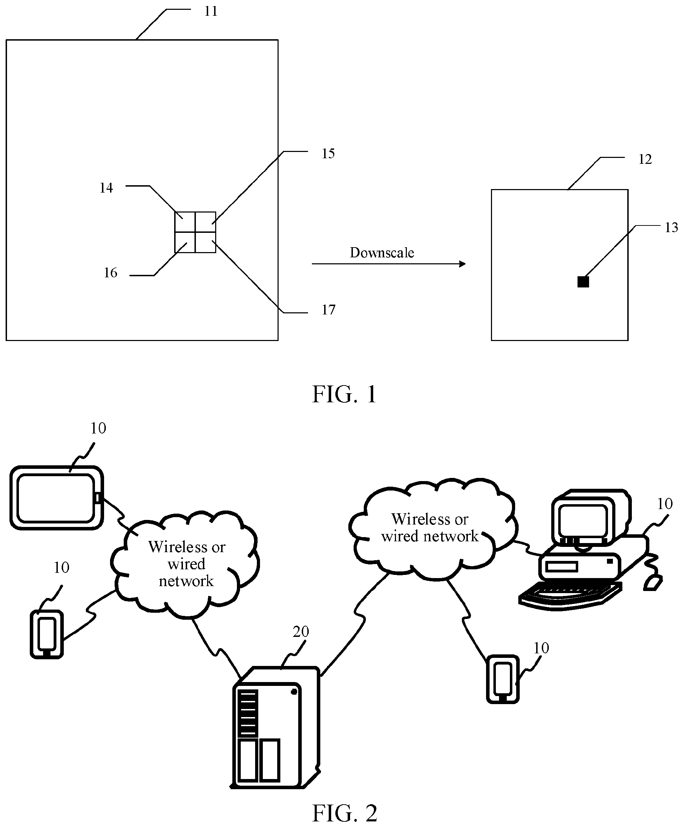

The source image is downscaled or upscaled to obtain the destination image. Exemplarily, as shown in FIG. 1, a source image 11 is downscaled to obtain a destination image 12.

The width-height size of the source image includes a width value and a height value of the source image. The width value of the source image is denoted as Width_{src} herein, and the height value of the source image is denoted as Height_{src}. The width-the height size of the destination image include a width value and a height value of the destination image. The width value of the destination image is denoted as Width_{dst} herein, and the height value of the destination image is denoted as Height_{dst}. The width value and the height value of the source image may be obtained by measuring a to-be-rescaled source image. The width value and the height value of the destination image may be set in advance based on an actual rescaling requirement. It is noted that in the application, the destination image is an image to be generated by the rescaling processing, and the width and height of the destination image are already known but the pixel value of each pixel in the destination image is yet to be determined, where the coordinates of each pixel in the destination image are determined before the pixel value thereof is determined.

The transverse rescaling coefficient may be a rescaling coefficient in a width direction, and the transverse rescaling coefficient is denoted as Wratio herein. The transverse rescaling coefficient is equal to the width value of the source image divided by the width value of the destination image, i.e., Wratio = Width_{src}/Width_{dst}.

The longitudinal rescaling coefficient may refer to a rescaling coefficient in a height direction, and the longitudinal rescaling coefficient is denoted as Hratio herein. The longitudinal rescaling coefficient is equal to the height value of the source image divided by the height value of the destination image, i.e., Hratio = Height_{src}/Height_{dst}.

2. For a to-be-processed pixel point in the destination image, coordinates of at least one source pixel point in the source image corresponding to the to-be-processed pixel point, and an interpolation coefficient are calculated based on coordinates of the to-be-processed pixel point, the transverse rescaling coefficient, and the longitudinal rescaling coefficient.

The to-be-processed pixel point may be any pixel point in the destination image. The coordinates of the to-be-processed pixel point refer to coordinates of the to-be-processed pixel point in the destination image. Exemplarily, a two-dimensional rectangular coordinate system may be established, an upper left vertex of the destination image is used as an origin, a width direction is used as an x-axis, and a height direction is used as a y-axis. In this way, coordinates of each pixel point in the destination image may be determined. Similarly, a two-dimensional rectangular coordinate system may be established, an upper left vertex of the source image is used as an origin, a width direction is used as an x-axis, and a height direction is used as a y-axis. In this way, coordinates of each pixel point in the source image may be determined.

As shown in FIG. 1, at least one source pixel point in the source image 11 corresponding to the to-be-processed pixel point 13 includes a first source pixel point 14, a second source pixel point 15, a third source pixel point 16, and a fourth source pixel point 17. Assuming that coordinates of the to-be-processed pixel point are (X_{dst}, Y_{dst}), then:
coordinates of the first source pixel point are (X_{src}, Y_{src});
coordinates of the second source pixel point are (MIN (Width_{src}, Xsrc+1), Ysrc);
coordinates of the third source pixel point are (X_{src}, MIN (Height_{src}, Y_{src}+1)); and
coordinates of the fourth source pixel point are (MIN (Width_{src}, Xsrc+1), MIN (Height_{src}, Y_{src}+1))
where (X_{src}, Y_{src}) = (floor (X_{dst}*Wratio), floor (Y_{dst}*Hratio)), and
MIN means taking a minimum value to prevent the coordinates from exceeding the size of the source image, and floor represents a rounding operation.

The interpolation coefficient includes a transverse interpolation coefficient and a longitudinal interpolation coefficient. The transverse interpolation coefficient refers to an interpolation coefficient in a width direction. The transverse interpolation coefficient is denoted as u herein, and the transverse interpolation coefficient u = fraction (X_{dst}*Wratio). The longitudinal interpolation coefficient refers to an interpolation coefficient in a height direction. The longitudinal interpolation coefficient is denoted as v herein, and the longitudinal interpolation coefficient v = fraction (Y_{dst}*Hratio), where fraction means taking a decimal part.

3. The pixel value of the to-be-processed pixel point is calculated based on the pixel value of the foregoing at least one source pixel point and the interpolation coefficient.

A pixel value F_{dst} of the to-be-processed pixel point is equal to (1-u)*(1-v)*F₀₀+(1-u)*v*F₀₁+u*(1-v)*F₁₀+u*v*F₁₁, F₀₀, F₁₀, F₀₁, and F₁₁ being respectively the pixel values of the first source pixel point, the second source pixel point, the third source pixel point, and the fourth source pixel point.

4. The destination image after the source image is rescaled is obtained based on the pixel value of each to-be-processed pixel point in the destination image.

For each to-be-processed pixel point in the destination image, the pixel value of the to-be-processed pixel point may be calculated in the manners provided in the foregoing operations 2-3. After the pixel value of each to-be-processed pixel point in the destination image is calculated, the destination image after the source image is rescaled is obtained.

It may be learned from the foregoing process that a floating-point division method is used during calculation of the rescaling coefficient, and a subsequent calculation process also includes a large number of complex floating-point operations, resulting in a relatively large operation amount and relatively low operation efficiency.

FIG. 2 is a schematic diagram of a solution implementation environment according to an embodiment of this application. The solution implementation environment may include a terminal device 10 and a server 20.

The terminal device 10 may be an electronic device such as a mobile phone, a tablet computer, a personal computer (PC), an on-board terminal, a smart home appliance, or a multimedia playback device. A client running an application such as a social application, an image processing application, or a gaming application may be installed in the terminal device 10, which is not limited in this application.

The server 20 may be one server, or may be a server cluster including a plurality of servers, or a cloud computing service center. The server 20 may be a background server of the foregoing application, and is configured to provide background services for the client of the application.

The terminal device 10 may communicate with the server 20 through a network, such as a wireless or wired network.

According to the image rescaling method provided in the embodiments of this application, each operation may be performed by a computer device. The computer device may be any electronic device having computing and storage capabilities. Exemplarily, the computer device may be the terminal device 10 in the solution implementation environment shown in FIG. 2, or may be the server 20 in the solution implementation environment shown in FIG. 2.

Exemplarily, the foregoing computer device may further be an embedded device. The embedded device is also referred to as an embedded system, which may include hardware and software and is a device that can operate independently. Software content thereof includes a software operating environment and an operating system thereof. Hardware content includes many aspects such as a signal processor, a memory, and a communication module. Compared with a general computer processing system, the embedded system has a great difference, which cannot implement a mass storage function since no mass storage medium matching the embedded system exists. Most of the storage media used are an erasable programmable read only memory (E-PROM), an electrically erasable PROM (EEPROM), and the like. For a software part, an application programming interface (API) is used as a core of a development platform. Exemplarily, the embedded device includes, but is not limited to the following types: an embedded microprocessor, an embedded microcontroller, an embedded digital signal processor, an embedded system on a chip, and the like.

The method provided in the embodiments of this application may relate to an artificial intelligence (AI) technology, and in particular, to a computer vision (CV) technology in the AI technology.

With the research and progress of artificial intelligence (AI) technologies, the AI technology has been researched and applied in many fields, such as a common smart home, a smart wearable device, a virtual assistant, a smart speaker, smart marketing, unmanned driving, automatic driving, an unmanned aerial vehicle, a robot, smart medical care, smart customer service, and the like. It is believed that with the development of technologies, the AI technology is to be applied in more fields and plays increasingly important value.

For example, with gradual popularization of AI applications, some conventional image processing algorithms are gradually replaced by deep learning. Through an AI model constructed based on a neural network, different functions such as target detection, face recognition, and gesture recognition may be implemented on an input image. A size of the input image of the AI model constructed based on the neural network is usually fixed (for example, fixed at a size of 224*224), and a size of a source image is arbitrary. Therefore, the source image of any size needs to be rescaled and adjusted to a destination image of a fixed size, and then the destination image is inputted into the AI model constructed based on the neural network for processing.

Furthermore, with the application of the AI application to the embedded device, after obtaining a source image, the embedded device needs to perform an image rescaling method to scale the source image to the destination image of the fixed size, and then input the destination image into the AI model constructed based on the neural network for processing. A detection or recognition result of the destination image is outputted by the AI model.

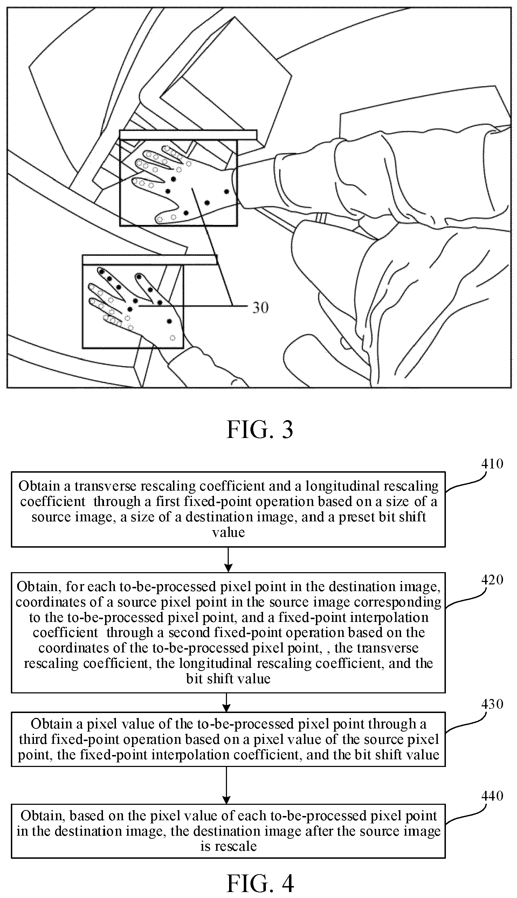

Gesture recognition in the field of XR is used as an example. An inputted hand image is recognized through the AI model constructed based on the neural network, to obtain a gesture recognition result of the image. As shown in FIG. 3, after a hand is detected from a captured image, an image only including the hand needs to be cropped for processing. A size of a cropped hand image 30 is random, and may be either large or small. The AI model constructed based on the neural network has a requirement for the size of the inputted image. In this case, the cropped hand image may be rescaled through the image rescaling method, to meet an input requirement of the AI model. Then, the rescaled hand image is inputted into the foregoing AI model, and a gesture recognition result is outputted by the AI model.

The method provided in the embodiments of this application may be applied to a business scenario of a game. For example, in a virtual reality (VR) game, a hand image can be efficiently rescaled for subsequent gesture recognition through an AI model, thereby enhancing processing efficiency and improving game experience.

It is noted that the technical features in the following embodiments in this application can implements in their respective embodiments, or implemented in combination with features in any other embodiments. That is, the embodiments in the application can be implemented alone, or in combination with any one or more of the other embodiments in the application, to achieve different technical solutions and technical effects.

In some embodiments of this application, an image rescaling method is provided. The method includes: obtaining a transverse rescaling coefficient and a longitudinal rescaling coefficient through a first fixed-point operation based on an original size of a source image, a target size of a destination image that is to be generated, and a pre-set bit shift value; obtaining, for a given pixel point in the destination image, coordinates of a source pixel point in the source image corresponding to the given pixel point, and a fixed-point interpolation coefficient through a second fixed-point operation based on coordinates of the given pixel point, the transverse rescaling coefficient, the longitudinal rescaling coefficient, and the bit shift value; and obtaining a pixel value of the given pixel point through a third fixed-point operation based on a pixel value of the source pixel point, the fixed-point interpolation coefficient, and the bit shift value, in order to generate the destination image. Based on the pixel value of each pixel point in the destination image, the destination image rescaled from the source image can be obtained.

FIG. 4 is a flowchart of an image rescaling method according to an embodiment of this application. Each operation of the method may be performed by a computer device. The method may include at least one of the following operations 410-440. It is noted that the embodiments described with reference to the drawings in this application are merely exemplary, and it is not limited in this application that the respective method must include all the steps as described and illustrated; rather, the method in the application may include some or all of the steps as listed, and the steps may be combined with each other arbitrarily to form various embodiments of the application.

Operation 410: Obtain a transverse rescaling coefficient and a longitudinal rescaling coefficient, through a first fixed-point operation based on a size of a source image, a size of a destination image, and a preset bit shift value .

The source image may refer to a to-be-rescaled image. The source image may be a picture, or may be an image frame in a video, which is not limited in this application. The source image is downscaled or upscaled to obtain the destination image. That is, the destination image is an image to be generated from the rescaling, such as the downscaling or the upscaling.

In this embodiment of this application, each size may refer to a width-height size. The size of the source image may be alternatively termed as an original size of the source image, and the size of the destination image may be alternatively termed as a target size of the destination image. The width-height size of the source image may include a width value and a height value of the source image. The width value of the source image is denoted as Width_{src} herein, and the height value of the source image is denoted as Height_{src}. The width-height size of the destination image includes a width value and a height value of the destination image. The width value of the destination image is denoted as Width_{dst} herein, and the height value of the destination image is denoted as Height_{dst}. The width value and the height value of the source image may be obtained by measuring a to-be-rescaled source image. The width value and the height value of the destination image may be set in advance based on an actual rescaling requirement.

In this embodiment of this application, a magnitude relationship between the width value Width_{src} of the source image and the width value Width_{dst} of the destination image is not limited. For example, Width_{src} is less than Width_{dst}, or Width_{src} is greater than Width_{dst}, or Width_{src} is equal to Width_{dst}. A magnitude relationship between the height value Height_{src} of the source image and the height value Height_{dst} of the destination image is not limited. For example, Height_{src} is less than Height_{dst}, or Height_{src} is greater than Height_{dst}, or Height_{src} is equal to Height_{dst}.

In addition, the image rescaling in this embodiment of this application may refer to adjusting a size of the source image, to obtain a destination image of a certain fixed size. The size of the source image is different from the fixed size (i.e., the size of the destination image). At least one of a width value and a height value of the source image is not equal to that of the destination image. For example, the width value of the source image is not equal to the width value of the destination image, and the height value of the source image is not equal to the height value of the destination image either. Alternatively, the width value of the source image is equal to the width value of the destination image, and the height value of the source image is not equal to the height value of the destination image. Alternatively, the width value of the source image is not equal to the width value of the destination image, and the height value of the source image is equal to the height value of the destination image. The image rescaling in this embodiment of this application may refer to downscaling (for example, decreasing the width value and the height value of the source image to obtain a destination image), or may refer to upscaling (for example, increasing both the width value and the height value of the source image to obtain a destination image), but may not be limited thereto. For example, the image rescaling may further be decreasing the width value of the source image and increasing the height value of the source image, to obtain a destination image, or increasing the width value of the source image and decreasing the height value of the source image, to obtain a destination image.

In an example, it is assumed that the width-height size of the source image is 500*600, which needs to be decreased to a destination size of 200*200. The width value Width_{src} of the source image is 500, representing that a quantity of pixels of the source image in a width direction is 500. The height value Height_{src} of the source image is 600, representing that a quantity of pixels of the source image in a height direction is 600. The width value Height_{src} of the destination image is 200, representing that the quantity of pixels of the destination image in the width direction is 200. The height value Height_{dst} of the destination image is also 200, representing that the quantity of pixels of the destination image in the height direction is also 200.

In addition, in this embodiment of this application, a bit shift value is in integral form and is preset in advance. In some embodiments, the bit shift value is an integer. For example, the bit shift value may be 7 or 8. For specific description of the bit shift value, reference may be made to the following embodiment.

The transverse rescaling coefficient may refer to a rescaling coefficient in a horizontal direction (for example, the width direction), and the transverse rescaling coefficient is denoted as Wratio herein. The longitudinal rescaling coefficient may refer to a rescaling coefficient in a vertical direction (for example, the height direction), and the longitudinal rescaling coefficient is denoted as Hratio herein. In this embodiment of this application, the transverse rescaling coefficient and the longitudinal rescaling coefficient are numerical values that are in integral form obtained through the fixed-point operation. In some embodiments, both the transverse rescaling coefficient and the longitudinal rescaling coefficient are integers. The fixed-point operation refers to an operation in which decimal point positions of all numbers are fixed during the operation.

In some embodiments, the fixed-point operation includes an integer division operation, and the size includes a width-height size. The width-the height size include a width value and a height value. In this case, the transverse rescaling coefficient and the longitudinal rescaling coefficient may be determined by dividing, by the width value of the destination image through the integer division operation, the width value of the source image shifted to the left by a first quantity of bits, to obtain a quotient as the transverse rescaling coefficient, and dividing, by the height value of the destination image through the integer division operation, the height value of the source image shifted to the left by the first quantity of bits, to obtain a quotient as the longitudinal rescaling coefficient. The first quantity of bits may be determined based on the bit shift value. A numerical value relationship between the first quantity of bits and the bit shift value is not limited in this embodiment of this application. Exemplarily, the first quantity of bits may be a predetermined number times the bit shift value; for example, in some embodiments, the first quantity of bits is twice the bit shift value.

The transverse rescaling coefficient Wratio is equal to
(Width_{src}<<(2×SHIFT_BIT))%Width_{dst}; and
the longitudinal rescaling coefficient Hratio is equal to
(Height_{src}<<(2×SHIFT_BIT))% Height_{dst}
where SHIFT _BIT represents the bit shift value, << represents a left shift operation, and % represents integer division, i.e., the quotient is calculated through the integer division operation. Exemplarily, 5%2 = 2.

Operation 420: Obtain, for each to-be-processed pixel point in the destination image, coordinates of a source pixel point in the source image corresponding to the to-be-processed pixel point, and a fixed-point interpolation coefficient through a second fixed-point operation based on the coordinates of the to-be-processed pixel point, the transverse rescaling coefficient, the longitudinal rescaling coefficient, and the bit shift value.

The to-be-processed pixel point may be any pixel point in the destination image, i.e., a given pixel point in the destination image. The coordinates of the to-be-processed pixel point may refer to coordinates of the to-be-processed pixel point in the destination image. Exemplarily, a two-dimensional rectangular coordinate system may be established, an upper left vertex of the destination image is used as an origin, a horizontal direction is used as an x-axis, and a vertical direction is used as a y-axis. In this way, coordinates of each pixel point in the destination image may be determined. Similarly, a two-dimensional rectangular coordinate system may be established, an upper left vertex of the source image is used as an origin, a horizontal direction is used as an x-axis, and a vertical direction is used as a y-axis. In this way, coordinates of each pixel point in the source image may be determined.

The source pixel point in the source image corresponding to the to-be-processed pixel point may include one or more source pixel points. In a possible implementation, a quantity of source pixel points in the source image corresponding to the to-be-processed pixel point may be 4. For example, the source pixel point in the source image corresponding to the to-be-processed pixel point includes a first source pixel point, a second source pixel point, a third source pixel point, and a fourth source pixel point.

In this case, coordinates of a plurality of source pixel points have the following relationship. An abscissa of the second source pixel point is a smaller value of the width value of the source image and a first numerical value, an ordinate of the second source pixel point is the same as an ordinate of the first source pixel point, and the first numerical value is an abscissa of the first source pixel point plus 1. An abscissa of the third source pixel point is the same as the abscissa of the first source pixel point, an ordinate of the third source pixel point is a smaller value of the height value of the source image and a second numerical value, and the second numerical value is the ordinate of the first source pixel point plus 1. An abscissa of the fourth source pixel point is the same as the abscissa of the second source pixel point, and an ordinate of the fourth source pixel point is the same as the ordinate of the third source pixel point.

Assuming that coordinates of a to-be-processed pixel point are (X_{dst}, Y_{dst}), X_{dst} represents an abscissa of the to-be-processed pixel point, and Y_{dst} represents an ordinate of the to-be-processed pixel point, then:
coordinates of the first source pixel point are (X_{src}, Y_{src});
coordinates of the second source pixel point are (MIN (Width_{src}, Xsrc+1), Ysrc);
coordinates of the third source pixel point are (X_{src}, MIN (Height_{src}, Y_{src}+1)); and
coordinates of the fourth source pixel point are (MIN (Width_{src}, Xsrc+1), MIN (Height_{src}, Y_{src}+1)),
where X_{src} represents the abscissa of the first source pixel point, Y_{dst} represents the ordinate of the first source pixel point, and MIN means taking a minimum value to prevent the coordinates from exceeding the size of the source image.

In some embodiments, a manner of obtaining the coordinates of the source pixel point in the source image corresponding to the to-be-processed pixel point through the fixed-point operation based on the coordinates of the to-be-processed pixel point, the transverse rescaling coefficient, the longitudinal rescaling coefficient, and the bit shift value may be shifting a product of the abscissa of the to-be-processed pixel point and the transverse rescaling coefficient to the right by the first quantity of bits, to obtain an abscissa of the first source pixel point in the source image corresponding to the to-be-processed pixel point, and shifting a product of the ordinate of the to-be-processed pixel point and the longitudinal rescaling coefficient to the right by the first quantity of bits, to obtain an ordinate of the first source pixel point, the first quantity of bits being determined based on the bit shift value. Exemplarily, the first quantity of bits is twice the bit shift value. After the abscissa and the ordinate of the first source pixel point are obtained, the coordinates of the source pixel point in the source image corresponding to the to-be-processed pixel point may be obtained based on the abscissa and the ordinate of the first source pixel point and the size of the source image through the method described above.

When the source pixel point in the source image corresponding to the to-be-processed pixel point includes the first source pixel point, the second source pixel point, the third source pixel point, and the fourth source pixel point, based on the relationship between the coordinates of the four source pixel points described above, a manner of obtaining the coordinates of the source pixel point in the source image corresponding to the to-be-processed pixel point based on the abscissa and the ordinate of the first source pixel point and the size of the source image may be determining a smaller value of the width value of the source image and the first numerical value as an abscissa of the second source pixel point, and determining the ordinate of the first source pixel point as an ordinate of the second source pixel point, the first numerical value being the abscissa of the first source pixel point plus 1; determining the abscissa of the first source pixel point as an abscissa of the third source pixel point, and determining a smaller value of the height value of the source image and a second numerical value as an ordinate of the third source pixel point, the second numerical value being the ordinate of the first source pixel point plus 1; determining the abscissa of the second source pixel point as an abscissa of the fourth source pixel point, and determining the ordinate of the third source pixel point as an ordinate of the fourth source pixel point; and forming the coordinates of the source pixel point corresponding to the to-be-processed pixel point in the source image based on the abscissa and the ordinate of the first source pixel point, the abscissa and the ordinate of the second source pixel point, the abscissa and the ordinate of the third source pixel point, and the abscissa and the ordinate of the fourth source pixel point.

In other words,
the abscissa X_{src} of the first source pixel point is equal to (X_{dst}×Wratio)>>(2×SHIFT_BIT); and
the ordinate Y_{src} of the first source pixel point is equal to (Y_{dst}×Hratio)>>(2×SHIFT_BIT)
where >> represents a right shift operation.

In this embodiment of this application, the interpolation coefficient is represented in a form of a fixed-point number, and is therefore referred to as a fixed-point interpolation coefficient. In some embodiments, the fixed-point interpolation coefficient is in integral form. For example, the fixed-point interpolation coefficient is an integer. The fixed-point interpolation coefficient includes a transverse fixed-point interpolation coefficient and a longitudinal fixed-point interpolation coefficient, which may also be integers. The transverse fixed-point interpolation coefficient is an interpolation coefficient in a width direction, and the transverse fixed-point interpolation coefficient is denoted as u herein. The longitudinal fixed-point interpolation coefficient is an interpolation coefficient in a height direction, and the longitudinal fixed-point interpolation coefficient is denoted as v herein.

In some embodiments, after the abscissa and the ordinate of the first source pixel point are obtained, a manner of determining the fixed-point interpolation coefficient in may be obtaining the fixed-point interpolation coefficient based on the abscissa and the ordinate, i.e., coordinates, of the first source pixel point, the abscissa and the ordinate, i.e., coordinates, of the to-be-processed pixel point, the transverse rescaling coefficient, the longitudinal rescaling coefficient, and the bit shift value.

In some embodiments, the fixed-point interpolation coefficient may include a transverse fixed-point interpolation coefficient and a longitudinal fixed-point interpolation coefficient. In this case, a manner of determining the fixed-point interpolation coefficient m may be: subtracting, from a value obtained by multiplying the abscissa of the to-be-processed pixel point by the transverse rescaling coefficient, a value obtained by the abscissa of the first source pixel point shifted to the left by the first quantity of bits, to obtain a first difference, and shifting the first difference to the right by a second quantity of bits, to obtain the transverse fixed-point interpolation coefficient; and subtracting, from a value obtained by multiplying the ordinate of the to-be-processed pixel point by the longitudinal rescaling coefficient, a value obtained by the ordinate of the first source pixel point shifted to the left by the first quantity of bits, to obtain a second difference, and shifting the second difference to the right by the second quantity of bits, to obtain the longitudinal fixed-point interpolation coefficient, the first quantity of bits and the second quantity of bits being determined based on the bit shift value. Exemplarily, the first quantity of bits is a predetermined number times the bit shift value, and the second quantity of bits is a predetermined number times the bit shift value; for example, in some embodiments, the first quantity of bits is twice the bit shift value, and the second quantity of bits is equal to the bit shift value.

In other words,
the transverse fixed-point interpolation coefficient u is equal to (X_{dst}×Wratio-(X_{src}<<2×SHIFT_BIT))>>SHIFT_BIT; and
the longitudinal fixed-point interpolation coefficient v is equal to (Y_{dst}×Hratio - (Y_{src}<<2×SHIFT_BIT))>>SHIFT_BIT.

In the foregoing embodiments, a rescaling coefficient is used in the process of calculating the coordinates of at least one source pixel point and the fixed-point interpolation coefficient. The rescaling coefficient is determined by the width-height sizes of the source image and the destination image, which are not fixed. However, in the technical solution provided in the foregoing embodiment, a unified operation method is used for different rescaling coefficients, and project maintainability is high.

Operation 430: Obtain a pixel value of the to-be-processed pixel point through a third fixed-point operation based on a pixel value of the source pixel point, the fixed-point interpolation coefficient, and the bit shift value.

In some embodiments, this operation includes the following sub-operations:
1. Multiply a difference between 1 shifted to the left by a second quantity of bits and the transverse fixed-point interpolation coefficient by a first saturation operation result, to obtain a first intermediate value, the first saturation operation result being obtained by performing a saturation operation on a first calculated value, the first calculated value being obtained by multiplying a difference between 1 shifted to the left by the second quantity of bits and the longitudinal fixed-point interpolation coefficient by a pixel value of the first source pixel point shifted to the right by the second quantity of bits, and
   the second quantity of bits being determined based on the bit shift value. Exemplarily, the second quantity of bits is equal to the bit shift value.

The first intermediate value is equal to (1<<SHIFT_BIT-u)×SAT{(1<<SHIFT_BIT-v)×F₀₀>>SHIFT_BIT)}, where SAT represents a saturation operation, i.e., when an operation result is greater than an upper limit or less than a lower limit, the result is equal to the upper limit or the lower limit. F₀₀ represents the pixel value of the first source pixel point.

2. Multiply the transverse fixed-point interpolation coefficient by a second saturation operation result, to obtain a second intermediate value, the second saturation operation result being obtained by performing a saturation operation on a second calculated value, the second calculated value being obtained by multiplying the difference between 1 shifted to the left by the second quantity of bits and the longitudinal fixed-point interpolation coefficient by a pixel value of the second source pixel point shifted to the right by the second quantity of bits, and
the second intermediate value being equal to u×SAT{((1<< SHIFT_BIT-v)×F₁₀)>>SHIFT_BIT}, F₁₀ representing the pixel value of the second source pixel point.

3. Multiply the difference between 1 shifted to the left by the second quantity of bits and the transverse fixed-point interpolation coefficient by a third saturation operation result, to obtain a third intermediate value, the third saturation operation result being obtained by performing a saturation operation on a third calculated value, the third calculated value being obtained by shifting a product of the longitudinal fixed-point interpolation coefficient and a pixel value of the third source pixel point to the right by the second quantity of bits, and
the third intermediate value being equal to (1<<SHIFT_BIT-u)×SAT{(v×F₀₁)>>SHIFT_BIT}, F₀₁ representing the pixel value of the third source pixel point.

4. Multiply the transverse fixed-point interpolation coefficient by a fourth saturation operation result, to obtain a fourth intermediate value, the fourth saturation operation result being obtained by performing a saturation operation on a fourth calculated value, the fourth calculated value being obtained by shifting a product of the longitudinal fixed-point interpolation coefficient and a pixel value of the fourth source pixel point to the right by the second quantity of bits, and
the fourth intermediate value being equal to u×SAT{(v×F₁₁)>>SHIFT_BIT}, F₁₁ representing the pixel value of the fourth source pixel point.

5. Obtain the pixel value of the to-be-processed pixel point based on the first intermediate value, the second intermediate value, the third intermediate value, and the fourth intermediate value.

Exemplarily, the first intermediate value, the second intermediate value, the third intermediate value, and the fourth intermediate value are added to obtain a summation result, and a saturation operation is performed on a numerical value obtained by shifting the summation result to the right by the second quantity of bits, to obtain the pixel value of the to-be-processed pixel point.

In other words, the summation result Fₜₘₚ is equal to (1<<SHIFT_BIT-u)× SAT(1<<SHIFT_BIT-v)×F₀₀>>SHIFT_BIT)}+(1<<SHIFT_BIT-u)×SAT{(v×F₀₁)>>SHIFT_BIT}+u×SAT{((1<<SHIFT_BIT-v)×F₁₀)>>SHIFT_BIT}+u×SAT{(v×F₁₁)>>SHIFT_BIT}.

The pixel value F_{dst} of the to-be-processed pixel point is equal to SAT{Fₜₘₚ>>SHIFT_BIT}.

According to the image rescaling method provided in the foregoing embodiment, in the whole process, operations such as a multiply-accumulate operation, a shifting operation, and the saturation operation are mainly adopted. These operations may be accelerated in parallel through single instruction multiple data (SIMD) very conveniently, thereby reducing device power consumption while improving operation efficiency.

A quantity of bits of the foregoing saturation operation is related to a value of the bit shift value. In some embodiments, the bit shift value is an integer in an interval of [7, 11]. For example, when the bit shift value is 7, an 8-bit saturation operation is used, namely, an upper limit of the saturation operation result is 255, and a lower limit is 0, and when the bit shift value is greater than 7, a 16-bit saturation operation is used, namely, an upper limit of the saturation operation result is 65535, and a lower limit is 0.

In addition, for selection of the bit shift value, requirements for the operation efficiency and precision may be comprehensively considered. A larger bit shift value indicates higher precision, but the operation efficiency is reduced. A smaller bit shift value indicates higher operation efficiency, but the precision is reduced. When the bit shift value is 7, the operation process in the foregoing image rescaling method may be implemented through an 8×8 multiply-accumulator (MAC). When the bit shift value is a numerical value between 8 and 11, the operation process in the foregoing image rescaling method needs to be implemented through a 16×16 MAC.

Operation 440: Obtain, based on the pixel value of each to-be-processed pixel point in the destination image, the destination image after the source image is rescaled.

For each to-be-processed pixel point in the destination image, the pixel value of the to-be-processed pixel point may be calculated in the manners provided in the foregoing operations 420-430. After the pixel value of each to-be-processed pixel point in the destination image is calculated, the destination image after the source image is rescaled is obtained.

According to the technical solutions provided in the embodiments of this application, when the source image needs to be rescaled to obtain the destination image that meets a size requirement, the transverse rescaling coefficient and the longitudinal rescaling coefficient that are in integral form may be obtained through the fixed-point operation based on the size of the source image, the size of the destination image, and a preset bit shift value in integral form. Then for each to-be-processed pixel point in the destination image, the coordinates of the source pixel point in the source image corresponding to the to-be-processed pixel point, and the fixed-point interpolation coefficient in integral form are obtained through the fixed-point operation based on the coordinates of the to-be-processed pixel point, the transverse rescaling coefficient, the longitudinal rescaling coefficient, and the bit shift value. Next, the pixel value of the to-be-processed pixel point is obtained through the fixed-point operation based on the pixel value of the source pixel point, the fixed-point interpolation coefficient, and the bit shift value. In the foregoing process, a rescaling coefficient in integral form is obtained through operation, then the fixed-point interpolation coefficient in integral form is calculated based on the rescaling coefficient in integral form, the pixel value of the to-be-processed pixel point is calculated based on the fixed-point interpolation coefficient in integral form, and then the destination image after the source image is rescaled is obtained based on the pixel value of each to-be-processed pixel point in the destination image, so that data in integral form is used in the whole image rescaling process to perform the fixed-point operation, thereby avoiding a floating-point operation, reducing an operation amount, and improving operation efficiency.

Because of this, this solution may be applied to an embedded device that has a high requirement for power consumption and does not support the floating-point operation, which has high software portability.

In the foregoing embodiment, transverse interpolation and longitudinal interpolation are both performed on 4 source pixel points (namely, an interpolation operation is performed on the 4 source pixel points), to obtain the pixel value of the to-be-processed pixel point. In some other embodiments, the interpolation operation may also be performed in 2 operations, namely, interpolation calculation is first performed on the source pixel point in a certain direction to obtain a pixel value of an intermediate pixel point, and then interpolation calculation is performed on the intermediate pixel point in another direction to obtain the pixel value of the to-be-processed pixel point.

In some embodiments, an example in which the transverse interpolation is first performed and then the longitudinal interpolation is performed is used. The pixel value of the to-be-processed pixel point is obtained through the following method:
1. A sum of a fifth saturation operation result and a sixth saturation operation result is determined as a pixel value of the first intermediate pixel point, the fifth saturation operation result being obtained by performing a saturation operation on a fifth calculated value, the fifth calculated value being obtained by multiplying the difference between 1 shifted to the left by a second quantity of bits and the transverse fixed-point interpolation coefficient by a pixel value of the first source pixel point shifted to the right by the second quantity of bits, the sixth saturation operation result being obtained by performing a saturation operation on a sixth calculated value, and the sixth calculated value being obtained by multiplying the transverse fixed-point interpolation coefficient by a pixel value of the second source pixel point shifted to the right by the second quantity of bits.
   In other words, the pixel value R₀ of the first intermediate pixel point is equal to SAT{(1<<SHIFT_BIT-u)×F₀₀>>SHIFT_BIT)}+SAT{(u×F₁₀)>>SHIFT_BIT}, and the first intermediate pixel point is a pixel point obtained after the transverse interpolation is performed on the first source pixel point and the second source pixel point.
2. A sum of a seventh saturation operation result and an eighth saturation operation result is determined as a pixel value of a second intermediate pixel point, the seventh saturation operation result being obtained by performing a saturation operation on a seventh calculated value, the seventh calculated value being obtained by multiplying the difference between 1 shifted to the left by the second quantity of bits and the transverse fixed-point interpolation coefficient by a pixel value of the third source pixel point shifted to the right by the second quantity of bits, the eighth saturation operation result being obtained by performing a saturation operation on an eighth calculated value, and the eighth calculated value being obtained by multiplying the transverse fixed-point interpolation coefficient by a pixel value of the fourth source pixel point shifted to the right by the second quantity of bits.
   In other words, the pixel value R₁ of the second intermediate pixel point is equal to SAT{(1<<SHIFT_BIT-u)×F₀₁>>SHIFT_BIT)}+SAT{(u×F₁₁)>>SHIFT_BIT}, and the second intermediate pixel point is a pixel point obtained after the transverse interpolation is performed on the third source pixel point and the fourth source pixel point.
3. A saturation operation is performed on a numerical value obtained by shifting a sum of a first product result and a second product result to the right by the second quantity of bits, to obtain the pixel value of the to-be-processed pixel point, the first product result being obtained by multiplying, by the pixel value of the first intermediate pixel point, a difference between 1 shifted to the left by the second quantity of bits and the longitudinal fixed-point interpolation coefficient, and the second product result being obtained by multiplying the longitudinal fixed-point interpolation coefficient by the pixel value of the second intermediate pixel point.

In other words, a sum Fₜₘₚ of a first product result and a second product result is equal to (1<<SHIFT_BIT-v)×R₀+v×R₁.

The pixel value F_{dst} of the to-be-processed pixel point is equal to SAT{Fₜₘₚ>>SHIFT_BIT}.

In this embodiment, the transverse interpolation is performed first and then the longitudinal interpolation is performed to obtain the pixel value of the to-be-processed pixel point.

In some embodiments, an example in which the longitudinal interpolation is first performed and then the transverse interpolation is performed is used. The pixel value of the to-be-processed pixel point is obtained through the following method:
1. A sum of a ninth saturation operation result and a tenth saturation operation result is determined as a pixel value of a third intermediate pixel point, the ninth saturation operation result being obtained by performing a saturation operation on a ninth calculated value, the ninth calculated value being obtained by multiplying a difference between 1 shifted to the left by a second quantity of bits and the longitudinal fixed-point interpolation coefficient by a pixel value of the first source pixel point shifted to the right by the second quantity of bits, the tenth saturation operation result being obtained by performing a saturation operation on a tenth calculated value, and the tenth calculated value being obtained by multiplying the longitudinal fixed-point interpolation coefficient by a pixel value of the third source pixel point shifted to the right by the second quantity of bits.
   In other words, the pixel value L₀ of the third intermediate pixel point is equal to SAT{(1<<SHIFT_BIT-v)×F₀₀>>SHIFT_BIT)}+SAT{(v×F₀₁)>>SHIFT_BIT}, and the third intermediate pixel point is a pixel point obtained after the longitudinal interpolation is performed on the first source pixel point and the third source pixel point.
2. A sum of an eleventh saturation operation result and a twelfth saturation operation result is determined as a pixel value of a fourth intermediate pixel point, the eleventh saturation operation result being obtained by performing a saturation operation on an eleventh calculated value, the eleventh calculated value being obtained by multiplying a difference between 1 shifted to the left by the second quantity of bits and the longitudinal fixed-point interpolation coefficient by a pixel value of the second source pixel point shifted to the right by the second quantity of bits, the twelfth saturation operation result being obtained by performing a saturation operation on a twelfth calculated value, and the twelfth calculated value being obtained by multiplying the longitudinal fixed-point interpolation coefficient by a pixel value of the fourth source pixel point shifted to the right by the second quantity of bits.
   In other words, the pixel value L₁ of the fourth intermediate pixel point is equal to SAT{(1<<SHIFT_BIT-v)×F₁₀>>SHIFT_BIT)}+SAT{(v×F₁₁)>>SHIFT_BIT}, and the fourth intermediate pixel point is a pixel point obtained after the longitudinal interpolation is performed on the second source pixel point and the fourth source pixel point.
3. A saturation operation is performed on a numerical value obtained by shifting a sum of a third product result and a fourth product result to the right by the second quantity of bits, to obtain the pixel value of the to-be-processed pixel point, the third product result being obtained by multiplying, by the pixel value of the third intermediate pixel point, a difference between 1 shifted to the left by the second quantity of bits and the transverse fixed-point interpolation coefficient, and the fourth product result being obtained by multiplying the transverse fixed-point interpolation coefficient by the pixel value of the fourth intermediate pixel point.

In other words, the sum Fₜₘₚ of the third product result and the fourth product result is equal to (1<<SHIFT_BIT-u)×L₀+u×L₁.

The pixel value F_{dst} of the to-be-processed pixel point is equal to SAT{Fₜₘₚ>>SHIFT_BIT}.

In this embodiment, the longitudinal interpolation is performed first and then the transverse interpolation is performed to obtain the pixel value of the to-be-processed pixel point.

For the solution of transverse interpolation first and then longitudinal interpolation, after transverse interpolation calculation is performed, a transverse interpolation result (namely, pixel values of the first intermediate pixel point and the second intermediate pixel point) may be stored first, and then the pixel value of the to-be-processed pixel point is obtained through longitudinal interpolation calculation. In this way, repeated calculation of the transverse interpolation can be avoided, and the operation amount can be reduced.

Similarly, for the solution of longitudinal interpolation first and then transverse interpolation, after longitudinal interpolation calculation is performed, a longitudinal interpolation result (namely, pixel values of the third intermediate pixel point and the fourth intermediate pixel point) may be stored first, and then the pixel value of the to-be-processed pixel point is obtained through transverse interpolation calculation. In this way, repeated calculation of the longitudinal interpolation can be avoided, and the operation amount can be reduced.

In actual application, a solution of simultaneously performing the transverse interpolation and the longitudinal interpolation, the solution of transverse interpolation first and then longitudinal interpolation, or the solution of longitudinal interpolation first and then transverse interpolation may be selected based on an actual situation. An advantage of the solution of simultaneously performing the transverse interpolation and the longitudinal interpolation is that application of additional memory is not needed, which may avoid a delay and power consumption caused by a read/write operation of the memory. An advantage of the solution of transverse interpolation first and then longitudinal interpolation or the solution of longitudinal interpolation first and then transverse interpolation is that some repeated interpolation operations can be avoided, but application of additional memory is required to store an interpolation result. Therefore, in actual application, an appropriate solution may be selected to perform image rescaling after the pros and cons are weighed. For example, when the size of the source image is greater than the size of the destination image, the solution of simultaneously performing the transverse interpolation and the longitudinal interpolation is preferably selected for use. When the size of the source image is less than the size of the destination image, the solution of transverse interpolation first and then longitudinal interpolation is preferably selected to avoid repeated calculation of transverse linear interpolation, or the solution of longitudinal interpolation first and then transverse interpolation is preferably selected to avoid repeated calculation of longitudinal linear interpolation.

An apparatus embodiment of this application is described below, which may be configured for performing the method embodiment of this application. For details not disclosed in the apparatus embodiment of this application, reference is made to the method embodiment of this application.

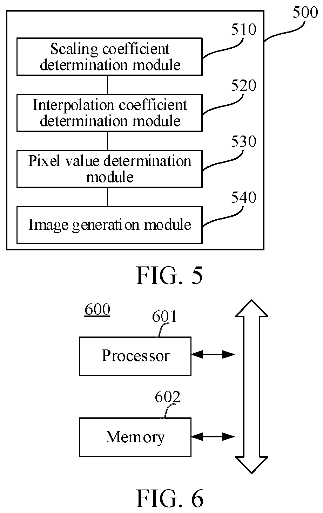

FIG. 5 is a block diagram of an image rescaling apparatus according to an embodiment of this application. The apparatus has a function of implementing the foregoing image rescaling method. The function may be implemented by hardware, or may be implemented by hardware executing corresponding software. The apparatus may be a computer device, or may be arranged in the computer device. The apparatus 500 may include a rescaling coefficient determination module 510, an interpolation coefficient determination module 520, and a pixel value determination module 530.

The rescaling coefficient determination module 510 is configured to configured to obtain a transverse rescaling coefficient and a longitudinal rescaling coefficient through a first fixed-point operation based on an original size of a source image, a target size of a destination image that is to be generated, and a pre-set bit shift value.

The interpolation coefficient determination module 520 is configured to obtain, for each to-be-processed pixel point in the destination image, coordinates of a source pixel point in the source image corresponding to the to-be-processed pixel point, and a fixed-point interpolation coefficient through a second fixed-point operation based on coordinates of the to-be-processed pixel point, the transverse rescaling coefficient, the longitudinal rescaling coefficient, and the bit shift value.

The pixel value determination module 530 is configured to obtain a pixel value of the to-be-processed pixel point through a third fixed-point operation based on a pixel value of the source pixel point, the fixed-point interpolation coefficient, and the bit shift value.

In embodiments, the apparatus 500 may further include an image generation module 540 configured to obtain, based on the pixel value of each to-be-processed pixel point in the destination image, the destination image after the source image is rescaled.

In some embodiments, the fixed-point operation includes an integer division method, the size including a width-height size, the width-height size including a width value and a height value. The rescaling coefficient determination module 510 includes a transverse coefficient determination sub-module and a longitudinal coefficient determination sub-module.

The transverse coefficient determination sub-module is configured to divide, by the width value of the destination image through the integer division operation, the width value of the source image shifted to the left by a first quantity of bits, to obtain a quotient as the transverse rescaling coefficient, the first quantity of bits being determined based on the bit shift value.

The longitudinal coefficient determination sub-module is configured to divide, by the height value of the destination image through the integer division operation, the height value of the source image shifted to the left by the first quantity of bits, to obtain a quotient as the longitudinal rescaling coefficient.

In some embodiments, the interpolation coefficient determination module 520 includes an abscissa determination sub-module, an ordinate determination sub-module, a coordinate determination sub-module, and an interpolation coefficient determination sub-module.

The abscissa determination sub-module is configured to shift a product of an abscissa of the to-be-processed pixel point and the transverse rescaling coefficient to the right by a first quantity of bits, to obtain an abscissa of a first source pixel point in the source image corresponding to the to-be-processed pixel point, the first quantity of bits being determined based on the bit shift value.

The ordinate determination sub-module is configured to shift a product of an ordinate of the to-be-processed pixel point and the longitudinal rescaling coefficient to the right by the first quantity of bits, to obtain an ordinate of the first source pixel point.

The coordinate determination sub-module is configured to obtain the coordinates of the source pixel point in the source image corresponding to the to-be-processed pixel point based on the abscissa and the ordinate of the first source pixel point and the size of the source image.

The interpolation coefficient determination sub-module is configured to obtain the fixed-point interpolation coefficient based on the abscissa and the ordinate of the first source pixel point, the abscissa and the ordinate of the to-be-processed pixel point, the transverse rescaling coefficient, the longitudinal rescaling coefficient, and the bit shift value.

In some embodiments, the size includes a width-height size, the width-height size including a width value and a height value, and the source pixel point in the source image corresponding to the to-be-processed pixel point including the first source pixel point, a second source pixel point, a third source pixel point, and a fourth source pixel point.

The coordinate determination sub-module is specifically configured to:
determine a smaller value of the width value of the source image and a first numerical value as an abscissa of the second source pixel point, and determine the ordinate of the first source pixel point as an ordinate of the second source pixel point, the first numerical value being the abscissa of the first source pixel point plus 1;
determine the abscissa of the first source pixel point as an abscissa of the third source pixel point, and determine a smaller value of the height value of the source image and a second numerical value as an ordinate of the third source pixel point, the second numerical value being the ordinate of the first source pixel point plus 1;
determine the abscissa of the second source pixel point as an abscissa of the fourth source pixel point, and determine the ordinate of the third source pixel point as an ordinate of the fourth source pixel point; and
form the coordinates of the source pixel point corresponding to the to-be-processed pixel point in the source image based on the abscissa and the ordinate of the first source pixel point, the abscissa and the ordinate of the second source pixel point, the abscissa and the ordinate of the third source pixel point, and the abscissa and the ordinate of the fourth source pixel point.

In some embodiments, the fixed-point interpolation coefficient includes a transverse fixed-point interpolation coefficient and a longitudinal fixed-point interpolation coefficient. The interpolation coefficient determination sub-module is configured to: subtract, from a value obtained by multiplying the abscissa of the to-be-processed pixel point by the transverse rescaling coefficient, a value obtained by shifting the abscissa of the first source pixel point to the left by the first quantity of bits, to obtain a first difference, and shift the first difference to the right by a second quantity of bits, to obtain the transverse fixed-point interpolation coefficient, the first quantity of bits and the second quantity of bits being determined based on the bit shift value; and
subtract, from a value obtained by multiplying the ordinate of the to-be-processed pixel point by the longitudinal rescaling coefficient, a value obtained by shifting the ordinate of the first source pixel point to the left by the first quantity of bits, to obtain a second difference, and shift the second difference to the right by the second quantity of bits, to obtain the longitudinal fixed-point interpolation coefficient.

In some embodiments, the pixel value determination module 530 includes a first intermediate value determination sub-module, a second intermediate value determination sub-module, a third intermediate value determination sub-module, a fourth intermediate value determination sub-module, and a pixel value determination sub-module.

The first intermediate value determination sub-module is configured to multiply a difference between 1 shifted to the left by a second quantity of bits and the transverse fixed-point interpolation coefficient by a first saturation operation result, to obtain a first intermediate value, the first saturation operation result being obtained by performing a saturation operation on a first calculated value, the first calculated value being obtained by multiplying a difference between 1 shifted to the left by the second quantity of bits and the longitudinal fixed-point interpolation coefficient by a pixel value of the first source pixel point shifted to the right by the second quantity of bits, and the second quantity of bits being determined based on the bit shift value.

The second intermediate value determination sub-module is configured to multiply the transverse fixed-point interpolation coefficient by a second saturation operation result, to obtain a second intermediate value, the second saturation operation result being obtained by performing a saturation operation on a second calculated value, and the second calculated value being obtained by multiplying the difference between 1 shifted to the left by the second quantity of bits and the longitudinal fixed-point interpolation coefficient by a pixel value of the second source pixel point shifted to the right by the second quantity of bits.

The third intermediate value determination sub-module is configured to multiply the difference between 1 shifted to the left by the second quantity of bits and the transverse fixed-point interpolation coefficient by a third saturation operation result, to obtain a third intermediate value, the third saturation operation result being obtained by performing a saturation operation on a third calculated value, and the third calculated value being obtained by shifting a product of the longitudinal fixed-point interpolation coefficient and a pixel value of the third source pixel point to the right by the second quantity of bits.

The fourth intermediate value determination sub-module is configured to multiply the transverse fixed-point interpolation coefficient by a fourth saturation operation result, to obtain a fourth intermediate value, the fourth saturation operation result being obtained by performing a saturation operation on a fourth calculated value, and the fourth calculated value being obtained by shifting a product of the longitudinal fixed-point interpolation coefficient and a pixel value of the fourth source pixel point to the right by the second quantity of bits.

The pixel value determination sub-module is configured to obtain the pixel value of the to-be-processed pixel point based on the first intermediate value, the second intermediate value, the third intermediate value, and the fourth intermediate value.

In some embodiments, the pixel value determination sub-module is configured to add the first intermediate value, the second intermediate value, the third intermediate value, and the fourth intermediate value to obtain a summation result, and perform a saturation operation on a numerical value obtained by shifting the summation result to the right by the second quantity of bits, to obtain the pixel value of the to-be-processed pixel point.

In some embodiments, the pixel value determination module 530 includes a first determination sub-module, a second determination sub-module, and a saturation operation sub-module.

The first determination sub-module is configured to determine a sum of a fifth saturation operation result and a sixth saturation operation result as a pixel value of the first intermediate pixel point, the fifth saturation operation result being obtained by performing a saturation operation on a fifth calculated value, the fifth calculated value being obtained by multiplying the difference between 1 shifted to the left by a second quantity of bits and the transverse fixed-point interpolation coefficient by a pixel value of the first source pixel point shifted to the right by the second quantity of bits, the sixth saturation operation result being obtained by performing a saturation operation on a sixth calculated value, and the sixth calculated value being obtained by multiplying the transverse fixed-point interpolation coefficient by a pixel value of the second source pixel point shifted to the right by the second quantity of bits.

The first determination sub-module is configured to determine a sum of a seventh saturation operation result and an eighth saturation operation result as a pixel value of a second intermediate pixel point, the seventh saturation operation result being obtained by performing a saturation operation on a seventh calculated value, the seventh calculated value being obtained by multiplying the difference between 1 shifted to the left by the second quantity of bits and the transverse fixed-point interpolation coefficient by a pixel value of the third source pixel point shifted to the right by the second quantity of bits, the eighth saturation operation result being obtained by performing a saturation operation on an eighth calculated value, and the eighth calculated value being obtained by multiplying the transverse fixed-point interpolation coefficient by a pixel value of the fourth source pixel point shifted to the right by the second quantity of bits.

The saturation operation sub-module is configured to perform a saturation operation on a numerical value obtained by shifting a sum of a first product result and a second product result to the right by the second quantity of bits, to obtain the pixel value of the to-be-processed pixel point, the first product result being obtained by multiplying, by the pixel value of the first intermediate pixel point, a difference between 1 shifted to the left by the second quantity of bits and the longitudinal fixed-point interpolation coefficient, and the second product result being obtained by multiplying the longitudinal fixed-point interpolation coefficient by the pixel value of the second intermediate pixel point.

In some embodiments, the pixel value determination module 530 includes a third determination sub-module, a fourth determination sub-module, and a saturation operation sub-module.

The third determination sub-module is configured to determine a sum of a ninth saturation operation result and a tenth saturation operation result as a pixel value of a third intermediate pixel point, the ninth saturation operation result being obtained by performing a saturation operation on a ninth calculated value, and the ninth calculated value being obtained by multiplying a difference between 1 shifted to the left by a second quantity of bits and the longitudinal fixed-point interpolation coefficient by a pixel value of the first source pixel point shifted to the right by the second quantity of bits, the tenth saturation operation result being obtained by performing a saturation operation on a tenth calculated value, and the tenth calculated value being obtained by multiplying the longitudinal fixed-point interpolation coefficient by a pixel value of the third source pixel point shifted to the right by the second quantity of bits.

The fourth determination sub-module is configured to determine a sum of an eleventh saturation operation result and a twelfth saturation operation result as a pixel value of a fourth intermediate pixel point, the eleventh saturation operation result being obtained by performing a saturation operation on an eleventh calculated value, the eleventh calculated value being obtained by multiplying a difference between 1 shifted to the left by the second quantity of bits and the longitudinal fixed-point interpolation coefficient by a pixel value of the second source pixel point shifted to the right by the second quantity of bits, the twelfth saturation operation result being obtained by performing a saturation operation on a twelfth calculated value, and the twelfth calculated value being obtained by multiplying the longitudinal fixed-point interpolation coefficient by a pixel value of the fourth source pixel point shifted to the right by the second quantity of bits.

The saturation operation sub-module is configured to perform a saturation operation on a numerical value obtained by shifting a sum of a third product result and a fourth product result to the right by the second quantity of bits, to obtain the pixel value of the to-be-processed pixel point, the third product result being obtained by multiplying, by the pixel value of the third intermediate pixel point, a difference between 1 shifted to the left by the second quantity of bits and the transverse fixed-point interpolation coefficient, and the fourth product result being obtained by multiplying the transverse fixed-point interpolation coefficient by the pixel value of the fourth intermediate pixel point.

In some embodiments, the bit shift value is an integer in an interval of [7, 11].

When the apparatus provided in the foregoing embodiment implements the functions of the apparatus, only division of the foregoing functional modules is used as an example for description. In a practical application, the functions may be completed by different functional modules as required. To be specific, an internal structure of a device is divided into different functional modules to complete all or part of the functions described above. In addition, the apparatus provided in the foregoing embodiment belongs to the same idea as the method embodiment. For details of the specific implementation process thereof, reference is made to the method embodiment. Details are not described herein again.

FIG. 6 is a structural block diagram of a computer device 600 according to an embodiment of this application.

Generally, the computer device 600 includes a processor 601 and a memory 602.

The processor 601 may include one or more processing cores, for example, a 4-core processor or an 8-core processor. The processor 601 may be implemented in at least one hardware form of digital signal processing (DSP), a field programmable gate array (FPGA), and a programmable logic array (PLA). The processor 601 may also include a main processor and a coprocessor. The main processor is a processor configured to process data in an awake state, and is also referred to as a central processing unit (CPU). The coprocessor is a low-power processor configured to process data in a standby state. In some embodiments, the processor 601 may be integrated with a graphics processing unit (GPU). The GPU is configured to render and draw content that needs to be displayed on a display screen. In some embodiments, the processor 601 may further include an AI processor. The AI processor is configured to process computing operations related to machine learning.

The memory 602 may include one or more computer-readable storage media. The computer-readable storage medium may be non-transient. The memory 602 may further include a high-speed random-access memory (RAM) and a nonvolatile memory, for example, one or more disk storage devices or flash storage devices. In some embodiments, the non-transitory computer-readable storage medium in the memory 602 is configured to store a computer program. The computer program is configured to be executed by one or more processors to implement the foregoing image rescaling method.

A person skilled in the art may understand that the structure shown in FIG. 6 does not constitute a limitation on the computer device 600, and the computer device may include more or fewer components than those shown in the figure, or some merged components, or different component arrangements.

In some embodiments, a computer-readable storage medium is further provided, having a computer program stored therein, the computer program being loaded and executed by a processor to implement the foregoing image rescaling method.

In some embodiments, the computer-readable storage medium may include a ROM, a RAM, a solid state drive (SSD), an optical disc, or the like. The RAM may include a resistive RAM (ReRAM) and a dynamic RAM (DRAM).

In some embodiments, a computer program product is further provided, including a computer program, the computer program being stored in a computer-readable storage medium, and a processor reading the computer program from the computer-readable storage medium and executing the computer program, to implement the foregoing image rescaling method.

For a face (or another biological feature) recognition technology involved in this application, when the foregoing embodiment of this application is applied to a specific product or technology, the process of collection, use, and processing of related data needs to comply with requirements of national laws and regulations. Before face (or another biological feature) information is collected, an information processing rule needs to be notified and individual consent (or a legal basis) of a destination object needs to be obtained, the face (or another biological feature) information is processed in strict accordance with the requirements of laws and regulations and a personal information processing rule, and technical measures are taken to ensure security of relevant data.

"A plurality of" mentioned herein means two or more. The term "and/or" is an association relationship for describing associated objects and represents that three relationships may exist. For example, A and/or B may represent the following three cases: only A exists, both A and B exist, and only B exists. The character "/" generally indicates an "or" relationship between a preceding associated object and a latter associated object. In addition, the operation numbers described in this specification merely exemplarily show a possible execution sequence of the operations. In some other embodiments, the foregoing operations may not be performed based on the number sequence. For example, two operations with different numbers may be performed simultaneously, or two operations with different numbers may be performed based on a sequence contrary to the sequence shown in the figure. This is not limited in the embodiments of this application.

The foregoing descriptions are merely exemplary embodiments of this application, but are not intended to limit this application. Any modification, equivalent replacement, or improvement made within the spirit and principle of this application shall fall within the protection scope of this application.

## Claims

1. An image re-scaling method, the method comprising:
obtaining a transverse rescaling coefficient and a longitudinal rescaling coefficient, through a first fixed-point operation based on an original size of a source image, a target size of a destination image that is to be generated, and a pre-set bit shift value;
obtaining, for a given pixel point in the destination image, coordinates of a source pixel point in the source image corresponding to the given pixel point, and a fixed-point interpolation coefficient through a second fixed-point operation based on coordinates of the given pixel point, the transverse rescaling coefficient, the longitudinal rescaling coefficient, and the bit shift value; and
obtaining a pixel value of the given pixel point through a third fixed-point operation based on a pixel value of the source pixel point, the fixed-point interpolation coefficient, and the bit shift value, in order to generate the destination image.

2. The method according to claim 1, wherein the first fixed-point operation comprises an integer division operation, each of the original size and the target size comprising a width value and a height value, and the obtaining a transverse rescaling coefficient and a longitudinal rescaling coefficient, through a first fixed-point operation based on an original size of a source image, a target size of a destination image, and a bit shift value comprises:
dividing, by the width value of the destination image through the integer division operation, the width value of the source image shifted to the left by a first quantity of bits, to obtain a quotient as the transverse rescaling coefficient, the first quantity of bits being determined based on the bit shift value; and
dividing, by the height value of the destination image through the integer division operation, the height value of the source image shifted to the left by the first quantity of bits, to obtain a quotient as the longitudinal rescaling coefficient.

3. The method according to claim 1 or 2, wherein the obtaining, for a given pixel point in the destination image, coordinates of a source pixel point in the source image corresponding to the given pixel point, and a fixed-point interpolation coefficient through a second fixed-point operation based on coordinates of the given pixel point, the transverse rescaling coefficient, the longitudinal rescaling coefficient, and the bit shift value comprises:
shifting a product of an abscissa of the given pixel point and the transverse rescaling coefficient to the right by a first quantity of bits, to obtain an abscissa of a first source pixel point in the source image corresponding to the given pixel point, the first quantity of bits being determined based on the bit shift value;
shifting a product of an ordinate of the given pixel point and the longitudinal rescaling coefficient to the right by the first quantity of bits, to obtain an ordinate of the first source pixel point;
obtaining the coordinates of the source pixel point in the source image corresponding to the given pixel point based on the abscissa and the ordinate of the first source pixel point and the original size of the source image; and
obtaining the fixed-point interpolation coefficient based on the abscissa and the ordinate of the first source pixel point, the abscissa and the ordinate of the given pixel point, the transverse rescaling coefficient, the longitudinal rescaling coefficient, and the bit shift value.

4. The method according to any one of claims 1 to 3, wherein the source pixel point in the source image corresponding to the given pixel point comprising the first source pixel point, a second source pixel point, a third source pixel point, and a fourth source pixel point, and the obtaining the coordinates of the source pixel point in the source image corresponding to the given pixel point based on the abscissa and the ordinate of the first source pixel point and the original size of the source image comprising:
determining a smaller value of the width value of the source image and a first numerical value as an abscissa of the second source pixel point, and determining the ordinate of the first source pixel point as an ordinate of the second source pixel point, the first numerical value being the abscissa of the first source pixel point plus 1;
determining the abscissa of the first source pixel point as an abscissa of the third source pixel point, and determining a smaller value of the height value of the source image and a second numerical value as an ordinate of the third source pixel point, the second numerical value being the ordinate of the first source pixel point plus 1;
determining the abscissa of the second source pixel point as an abscissa of the fourth source pixel point, and determining the ordinate of the third source pixel point as an ordinate of the fourth source pixel point; and
forming the coordinates of the source pixel point corresponding to the given pixel point in the source image based on the abscissa and the ordinate of the first source pixel point, the abscissa and the ordinate of the second source pixel point, the abscissa and the ordinate of the third source pixel point, and the abscissa and the ordinate of the fourth source pixel point.

5. The method according to claim 4, wherein the fixed-point interpolation coefficient comprises a transverse fixed-point interpolation coefficient and a longitudinal fixed-point interpolation coefficient; and
the obtaining a pixel value of the given pixel point through a third fixed-point operation based on a pixel value of the source pixel point, the fixed-point interpolation coefficient, and the bit shift value comprises:
multiplying a difference between 1 shifted to the left by a second quantity of bits and the transverse fixed-point interpolation coefficient by a first saturation operation result, to obtain a first intermediate value, the first saturation operation result being obtained by performing a saturation operation on a first calculated value, the first calculated value being obtained by multiplying a difference between 1 shifted to the left by the second quantity of bits and the longitudinal fixed-point interpolation coefficient by a pixel value of the first source pixel point shifted to the right by the second quantity of bits, and the second quantity of bits being determined based on the bit shift value;
multiplying the transverse fixed-point interpolation coefficient by a second saturation operation result, to obtain a second intermediate value, the second saturation operation result being obtained by performing a saturation operation on a second calculated value, and the second calculated value being obtained by multiplying the difference between 1 shifted to the left by the second quantity of bits and the longitudinal fixed-point interpolation coefficient by a pixel value of the second source pixel point shifted to the right by the second quantity of bits;
multiplying the difference between 1 shifted to the left by the second quantity of bits and the transverse fixed-point interpolation coefficient by a third saturation operation result, to obtain a third intermediate value, the third saturation operation result being obtained by performing a saturation operation on a third calculated value, and the third calculated value being obtained by shifting a product of the longitudinal fixed-point interpolation coefficient and a pixel value of the third source pixel point to the right by the second quantity of bits;
multiplying the transverse fixed-point interpolation coefficient by a fourth saturation operation result, to obtain a fourth intermediate value, the fourth saturation operation result being obtained by performing a saturation operation on a fourth calculated value, and the fourth calculated value being obtained by shifting a product of the longitudinal fixed-point interpolation coefficient and a pixel value of the fourth source pixel point to the right by the second quantity of bits; and
obtaining the pixel value of the given pixel point based on the first intermediate value, the second intermediate value, the third intermediate value, and the fourth intermediate value.

6. The method according to claim 5, wherein the obtaining the pixel value of the given pixel point based on the first intermediate value, the second intermediate value, the third intermediate value, and the fourth intermediate value comprises:
adding the first intermediate value, the second intermediate value, the third intermediate value, and the fourth intermediate value to obtain a summation result; and
performing a saturation operation on a numerical value obtained by shifting the summation result to the right by the second quantity of bits, to obtain the pixel value of the given pixel point.

7. The method according to claim 4, wherein the fixed-point interpolation coefficient comprises a transverse fixed-point interpolation coefficient and a longitudinal fixed-point interpolation coefficient; and
the obtaining a pixel value of the given pixel point through a third fixed-point operation based on a pixel value of the source pixel point, the fixed-point interpolation coefficient, and the bit shift value comprises:
determining a sum of a fifth saturation operation result and a sixth saturation operation result as a pixel value of a first intermediate pixel point, the fifth saturation operation result being obtained by performing a saturation operation on a fifth calculated value, the fifth calculated value being obtained by multiplying a difference between 1 shifted to the left by a second quantity of bits and the transverse fixed-point interpolation coefficient by a pixel value of the first source pixel point shifted to the right by the second quantity of bits, the sixth saturation operation result being obtained by performing a saturation operation on a sixth calculated value, and the sixth calculated value being obtained by multiplying the transverse fixed-point interpolation coefficient by a pixel value of the second source pixel point shifted to the right by the second quantity of bits;
determining a sum of a seventh saturation operation result and an eighth saturation operation result as a pixel value of a second intermediate pixel point, the seventh saturation operation result being obtained by performing a saturation operation on a seventh calculated value, the seventh calculated value being obtained by multiplying the difference between 1 shifted to the left by the second quantity of bits and the transverse fixed-point interpolation coefficient by a pixel value of the third source pixel point shifted to the right by the second quantity of bits, the eighth saturation operation result being obtained by performing a saturation operation on an eighth calculated value, and the eighth calculated value being obtained by multiplying the transverse fixed-point interpolation coefficient by a pixel value of the fourth source pixel point shifted to the right by the second quantity of bits; and
performing a saturation operation on a numerical value obtained by shifting a sum of a first product result and a second product result to the right by the second quantity of bits, to obtain the pixel value of the given pixel point, the first product result being obtained by multiplying, by the pixel value of the first intermediate pixel point, a difference between 1 shifted to the left by the second quantity of bits and the longitudinal fixed-point interpolation coefficient, and the second product result being obtained by multiplying the longitudinal fixed-point interpolation coefficient by the pixel value of the second intermediate pixel point.

8. The method according to claim 4, wherein the fixed-point interpolation coefficient comprises a transverse fixed-point interpolation coefficient and a longitudinal fixed-point interpolation coefficient; and
the obtaining a pixel value of the given pixel point through a third fixed-point operation based on a pixel value of the source pixel point, the fixed-point interpolation coefficient, and the bit shift value comprises:
determining a sum of a ninth saturation operation result and a tenth saturation operation result as a pixel value of a third intermediate pixel point, the ninth saturation operation result being obtained by performing a saturation operation on a ninth calculated value, the ninth calculated value being obtained by multiplying a difference between 1 shifted to the left by a second quantity of bits and the longitudinal fixed-point interpolation coefficient by a pixel value of the first source pixel point shifted to the right by the second quantity of bits, the tenth saturation operation result being obtained by performing a saturation operation on a tenth calculated value, and the tenth calculated value being obtained by multiplying the longitudinal fixed-point interpolation coefficient by a pixel value of the third source pixel point shifted to the right by the second quantity of bits;
determining a sum of an eleventh saturation operation result and a twelfth saturation operation result as a pixel value of a fourth intermediate pixel point, the eleventh saturation operation result being obtained by performing a saturation operation on an eleventh calculated value, the eleventh calculated value being obtained by multiplying a difference between 1 shifted to the left by the second quantity of bits and the longitudinal fixed-point interpolation coefficient by a pixel value of the second source pixel point shifted to the right by the second quantity of bits, the twelfth saturation operation result being obtained by performing a saturation operation on a twelfth calculated value, and the twelfth calculated value being obtained by multiplying the longitudinal fixed-point interpolation coefficient by a pixel value of the fourth source pixel point shifted to the right by the second quantity of bits; and
performing a saturation operation on a numerical value obtained by shifting a sum of a third product result and a fourth product result to the right by the second quantity of bits, to obtain the pixel value of the given pixel point, the third product result being obtained by multiplying, by the pixel value of the third intermediate pixel point, a difference between 1 shifted to the left by the second quantity of bits and the transverse fixed-point interpolation coefficient, and the fourth product result being obtained by multiplying the transverse fixed-point interpolation coefficient by the pixel value of the fourth intermediate pixel point.

9. The method according to claim 3, wherein the fixed-point interpolation coefficient comprises a transverse fixed-point interpolation coefficient and a longitudinal fixed-point interpolation coefficient; and
the obtaining the fixed-point interpolation coefficient based on the abscissa and the ordinate of the first source pixel point, the abscissa and the ordinate of the given pixel point, the transverse rescaling coefficient, the longitudinal rescaling coefficient, and the bit shift value comprises:
subtracting, from a value obtained by multiplying the abscissa of the given pixel point by the transverse rescaling coefficient, a value obtained by shifting the abscissa of the first source pixel point to the left by the first quantity of bits, to obtain a first difference, and shifting the first difference to the right by a second quantity of bits, to obtain the transverse fixed-point interpolation coefficient, the first quantity of bits and the second quantity of bits being determined based on the bit shift value; and
subtracting, from a value obtained by multiplying the ordinate of the given pixel point by the longitudinal rescaling coefficient, a value obtained by shifting the ordinate of the first source pixel point to the left by the first quantity of bits, to obtain a second difference, and shifting the second difference to the right by the second quantity of bits, to obtain the longitudinal fixed-point interpolation coefficient.

10. The method according to any one of claims 1 to 9, wherein the bit shift value is an integer in an interval of [7, 11].

11. An image rescaling apparatus, deployed on a computer device, the apparatus comprising:
a rescaling coefficient determination module, configured to obtain a transverse rescaling coefficient and a longitudinal rescaling coefficient, through a first fixed-point operation based on an original size of a source image, a target size of a destination image that is to be generated, and a pre-set bit shift value;
an interpolation coefficient determination module, configured to obtain, for a given pixel point in the destination image, coordinates of a source pixel point in the source image corresponding to the given pixel point, and a fixed-point interpolation coefficient, through a second fixed-point operation based on coordinates of the given pixel point, the transverse rescaling coefficient, the longitudinal rescaling coefficient, and the bit shift value;
a pixel value determination module, configured to obtain a pixel value of the given pixel point through a third fixed-point operation based on a pixel value of the source pixel point, the fixed-point interpolation coefficient, and the bit shift value.

12. A computer device, comprising a processor and a memory, the memory having a computer program stored therein, the computer program being loaded and executed by the processor to implement the method according to any one of claims 1 to 10.

13. A computer-readable storage medium, having a computer program stored therein, the computer program being loaded and executed by a processor to implement the method according to any one of claims 1 to 10.

14. A computer program product, comprising a computer program, the computer program being stored in a computer-readable storage medium, and a processor reading the computer program from the computer-readable storage medium and executing the computer program to implement the method according to any one of claims 1 to 10.
